# EUROPÄISCHE PATENTANMELDUNG

(11) **EP 1 057 675 A2**
(43) Veröffentlichungstag der Anmeldung: **06.12.2000**
(21) Anmeldenummer: 00109396.2
(22) Anmeldetag: 03.05.2000
(51) Int. Cl.: B60K 17/08

(54) **Schaltgetriebe für Kraftfahrzeuge mit Mittelmotor**

(30) Priorität: 01.06.1999 DE 19925041
(71) Anmelder: Bayerische Motoren Werke Aktiengesellschaft, 80809 München (DE)
(72) Erfinder: Biskup, Ernst, 82223 Eichenau (DE); Greil, Jürgen, 80801 München (DE); Pflaum, Wolfgang, 85716 Unterschleissheim (DE); Herzinger, Helmut, 86565 Sattelberg (DE)

(57) **Zusammenfassung**

Die Erfindung betrifft ein Schaltgetriebe für Kraftfahrzeuge mit Mittelmotor, der hinter dem Getriebe angeordnet ist, umfassend eine Getriebeeingangswelle, eine zur Getriebeeingangswelle parallele Vorgelegewelle, eine zur Vorgelegewelle parallele Getriebeausgangswelle, mehrere Zahnradstufen, die jeweils zwei miteinander kämmende Zahnräder aufweisen, von denen eines auf der zugeordneten Welle drehfest angeordnet ist und das andere auf der zugeordneten Welle drehbar gelagert ist, Wechselkupplungen, um ausgewählte drehbar gelagerte Zahnräder mit der zugeordneten Welle drehfest zu verbinden, und eine mit dem Hinterachsgetriebe gekuppelte, seitlich neben dem Getriebe und dem Motor angeordnete Abtriebswelle, die über Stirnräder oder über einen Kettentrieb mit der Getriebeausgangswelle gekuppelt ist.

## Beschreibung

Die Erfindung betrifft ein Schaltgetriebe für Kraftfahrzeuge mit Mittelmotor, der hinter dem Getriebe angeordnet ist, umfassend eine Getriebeeingangswelle, eine zur Getriebeeingangswelle parallele Vorgelegewelle, eine zur Vorgelegewelle parallele Getriebeausgangswelle, mehrere Zahnradstufen, die jeweils zwei miteinander kämmende Zahnräder aufweisen, von denen eines auf der zugeordneten Welle drehfest angeordnet ist und das andere auf der zugeordneten Welle drehbar gelagert ist, Wechselkupplungen, um ausgewählte drehbar gelagerte Zahnräder mit der zugeordneten Welle drehfest zu verbinden, und eine mit der Getriebeausgangswelle und dem Hinterachsgetriebe gekuppelte, seitlich neben dem Getriebe und dem Motor angeordnete Abtriebswelle.

Es sind verschiedene Bauarten von Kraftfahrzeugen, insbesondere Sportwagen, mit Mittelmotor bekannt. Bei den meisten Ausführungsformen ist das Getriebe in Fahrtrichtung gesehen hinter dem Motor angeflanscht. Bei dieser Bauart ist das Hinterachsgetriebe in das Schaltgetriebe integriert. Aus bestimmten Gründen erscheint aber eine Ausführungsform vorteilhafter, bei der das Getriebe in Fahrtrichtung vor dem Motor angeordnet ist. Bei dieser Bauart bereitet jedoch die Verbindung der Getriebeausgangswelle mit dem Hinterachsgetriebe gewisse Schwierigkeiten, weil der Kraftfluß um 180° umgelenkt werden muß, was eine seitlich neben dem Getriebe und dem Motor angeordnete Abtriebswelle erforderlich macht. Bei einer bekannten Ausführungsform eines Schaltgetriebes der eingangs genannten Art ist eine zusätzliche Getriebeeinheit mit Stirnrädern oder einem Kettentrieb vorgesehen, um die Getriebeausgangswelle mit der Abtriebswelle zu verbinden. Dieses bekannte Schaltgetriebe mit der zusätzlichen Getriebeeinheit ist speziell auf den Motor und das betreffende Kraftfahrzeug zugeschnitten. Diese Sonderbauart eines Schaltgetriebes ist daher nur bei einem bestimmten Fahrzeugtyp einsetzbar. Wegen der geringen Stückzahl ist dieses Getriebe sehr teuer in der Herstellung.

Der Erfindung liegt die Aufgabe zugrunde, ein Schaltgetriebe der eingangs genannten Bauart zu schaffen, das mit einem geringen konstruktiven Aufwand aus einem vorhandenen Standardgetriebe abgeleitet werden kann.

Erfindungsgemäß wird diese Aufgabe dadurch gelöst, daß die Abtriebswelle über Stirnräder oder einen Kettentrieb mit der Getriebeausgangswelle gekuppelt ist. Die Abtriebswelle kann beispielsweise mit einem auf der Getriebeausgangswelle drehfest angeordneten Stirnrad gekuppelt sein, das zugleich eine der Zahnradstufen bildet. Auf der Getriebeausgangswelle kann auch ein zusätzliches Stirnrad drehfest angeordnet sein, das mit einem an der Abtriebswelle drehfest angeordneten Zahnrad verbunden ist.

Da der seitliche Abstand zwischen der Getriebeausgangswelle und der Abtriebswelle einen verhältnismäßig großen Durchmesser des mit der Abtriebswelle verbundenen Stirnrades erforderlich macht, kann es vorteilhaft sein, wenn die Abtriebswelle über mindestens ein Zwischenrad mit einem auf der Getriebeausgangswelle drehfest angeordneten Stirnrad gekuppelt ist. Auf der Getriebeausgangswelle kann auch ein Kettenrad drehfest angeordnet sein, das über eine Kette mit einem am vorderen Ende der Abtriebswelle drehfest angeordneten Kettenrad verbunden ist.

Bei allen Ausführungsformen des erfindungsgemäßen Schaltgetriebes ist auch ein Allradantrieb möglich, indem die Getriebeausgangswelle über eine Kupplung mit einem Vorderachsgetriebe verbunden wird.

Einige Ausführungsbeispiele der Erfindung sind in den Zeichnungen dargestellt und werden nachfolgend näher erläutert. Es zeigt:
Fig. 1 eine schematische Draufsicht auf eine erste Ausführungsform eines Schaltgetriebes für Kraftfahrzeuge mit Mittelmotor, der hinter dem Getriebe angeordnet ist,
Fig. 2 eine Darstellung ähnlich wie Fig. 1, die aber eine zweite Ausführungsform zeigt,
Fig. 3 einen Querschnitt durch ein Schaltgetriebe gemäß einer dritten Ausführungsform,
Fig. 4 eine Draufsicht auf eine vierte Ausführungsform eines Schaltgetriebes, und
Fig. 5 eine Darstellung ähnlich wie Fig. 4, die aber ein Kraftfahrzeug mit Allradantrieb zeigt.

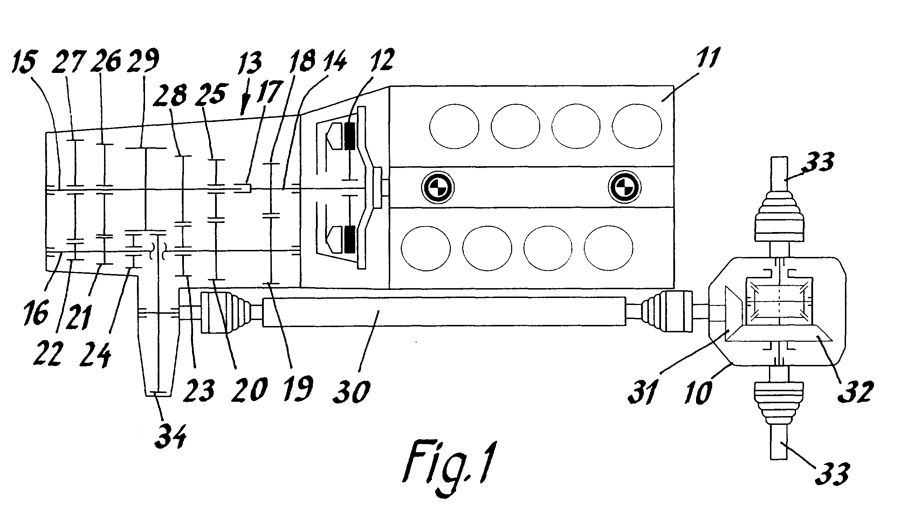

Fig. 1 zeigt einen unmittelbar vor einem Hinterachsgetriebe 10 angeordneten Motor 11. An der dem Hinterachsgetriebe 10 gegenüberliegenden Seite des Motors 11 ist eine schematisch dargestellte Kupplung 12 angeordnet. An den Motor 11 ist ein Schaltgetriebe 13 einer Standardbauart angeflanscht. Das Schaltgetriebe 13 umfaßt im wesentlichen eine Getriebeeingangswelle 14, eine zu dieser koaxiale Getriebeausgangswelle 15 und eine Vorgelegewelle 16, die zur Getriebeeingangs- und Getriebeausgangswelle 14, 15 parallel ist. Die Getriebeausgangswelle 15 ist durch eine Welle in Welle Lagerung 17 mit der Getriebeeingangswelle 14 drehbar verbunden. Der Welle in Welle Lagerung 17 ist eine (nicht gezeigte) Wechselkupplung zugeordnet. Durch Schließen dieser Wechselkupplung kann die Getriebeeingangswelle 14 unmittelbar mit der Getriebeausgangswelle 15 verbunden werden. Ein mit der Getriebeeingangswelle 14 drehfest verbundenes Zahnrad 18 kämmt mit einem Zahnrad 19, das mit der Vorgelegewelle 16 drehfest verbunden ist. Die beiden Zahnräder 18 und 19 bilden die sogenannte Konstantverzahnung. Mit der Vorgelegewelle 16 sind ferner drei Zahnräder 20, 21 und 22 drehfest und zwei Zahnräder 23 und 24 drehbar verbunden. Die drehfest angeordneten Zahnräder 20, 21 und 22 der Vorgelegewelle 16 kämmen mit Zahnrädern 25, 26 und 27, die auf der Getriebeausgangswelle 15 drehbar angeordnet sind. Die drehbar angeordneten Zahnräder 23 und 24 der Vorgelegewelle 16 kämmen mit Zahnrädern 28 und 29, die auf der Getriebeausgangswelle 15 drehfest angeordnet sind. Es sind (nicht gezeigte) Wechselkupplungen vorgesehen, um ein ausgewähltes drehbar gelagertes Zahnrad mit der zugeordneten Welle 15 oder 16 drehfest zu verbinden, so daß die gewünschte Gangstufe geschaffen wird. Die Gangstufe für den Rückwärtsgang ist der Einfachheit halber nicht gezeigt. Das mit der Getriebeausgangswelle 15 drehfest verbundene Zahnrad 29 ist aus einem nachfolgend erläuterten Grund verbreitert. Von dieser Maßnahme abgesehen handelt es sich bei dem Schaltgetriebe 13 um ein in Großserle hergestelltes Getriebe.

Seitlich neben dem Motor 11 und dem Getriebe 13 erstreckt sich eine Abtriebswelle 30. Die Abtriebswelle 30 ist an ihrem hinteren Ende mit einem Kegelrad 31 versehen, das mit einem Kegelrad 32 des Ausgleichgetriebes kämmt Mit dem Ausgleichgetriebe sind die Hinterachswellen 33 gekuppelt. Am vorderen Ende der Abtriebswelle 30 ist ein Zahnrad 34 angeordnet, das mit dem auf der Getriebeausgangswelle 15 drehfest angeordneten Zahnrad 29 kämmt.

Wenn die der Welle in Welle Lagerung 17 zugeordnete Wechselkupplung ausgerückt ist, erfolgt der Kraftfluß von der Getriebeeingangswelle 14 über die Konstantverzahnung 18, 19 auf die Vorgelegewelle 16 und von dort über eine der Zahnradpaarungen 20, 25; 23, 28; 24, 29; 21, 26 oder 22, 27 auf die Getriebeausgangswelle 15. In allen diesen Schaltstufen ist eines der drehbar gelagerten Zahnräder 23, 24, 25, 26 und 27 über eine der (nicht gezeigten) Wechselkupplungen mit der zugeordneten Welle 15 oder 16 drehfest verbunden. Wenn die der Welle in Welle Lagerung 17 zugeordnete Wechselkupplung geschlossen wird, dann ist die Getriebeeingangswelle 14 unmittelbar mit der Getriebeausgangswelle 15 verbunden. In dieser Schaltstufe, die auch als Direktgang bezeichnet wird, sind alle anderen (nicht gezeigten) Wechselkupplungen geöffnet.

Von der Getriebeausgangswelle 15 erfolgt der Kraftfluß über die Zahnradpaarung 29, 34 durch die Abtriebswelle 30 über die Kegelradpaarung 31, 32 durch das Ausgleichgetriebe zu den Hinterachswellen 33.

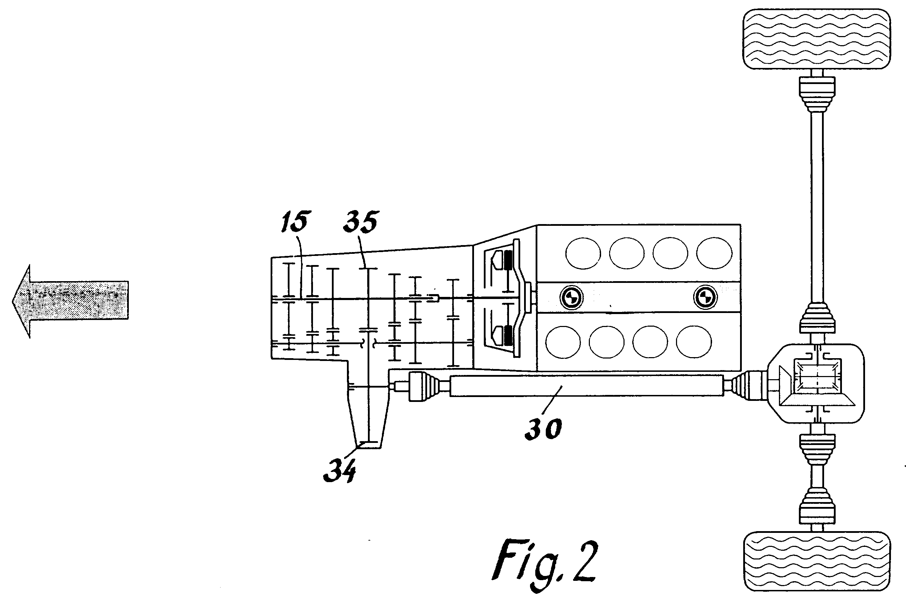

Wie bereits erwähnt, ist bei der in Fig. 1 gezeigten Ausführungsform eines der auf der Getriebeausgangswelle 15 drehfest angeordneten Zahnräder gegenüber der Standardbauart des Schaltgetriebes verbreitert, und es kämmt sowohl mit einem der auf der Vorgelegewelle 16 drehbar angeordneten Zahnräder als auch mit dem am vorderen Ende der Abtriebswelle 30 drehfest angeordneten Zahnrad 34. Das verbreiterte Zahnrad ist daher einer doppelten Belastung ausgesetzt. Zur Vermeidung einer solchen Doppelbelastung ist bei der in Fig. 2 gezeigten Ausführungsform auf der Getriebeausgangswelle 15 ein zusätzliches Zahnrad 35 drehfest angeordnet, das ausschließlich mit dem an der Abtriebswelle 30 befestigten Zahnrad 34 kämmt. Von dieser Abwandlung abgesehen stimmt die Ausführungsform nach Fig. 2 mit derjenigen nach Fig. 1 überein.

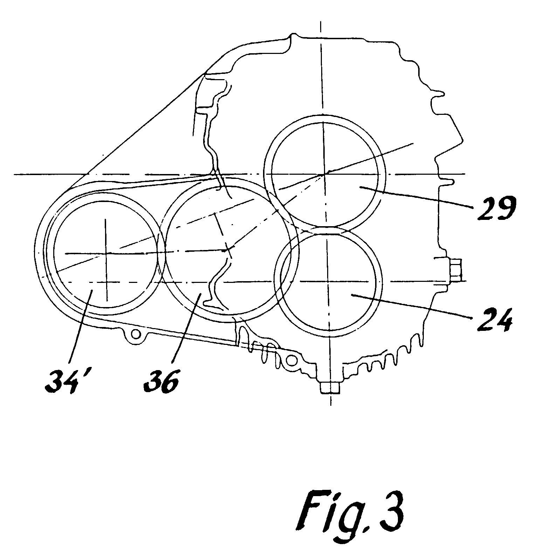

Wie aus den Fig. 1 und 2 hervorgeht, macht der konstruktionsbestimmte Achsabstand zwischen der Abtriebswelle 30 und der Getriebeausgangswelle 15 einen verhältnismäßig großen Durchmesser des an der Abtriebswelle 30 befestigten Zahnrades 34 erforderlich. Zur Vermeidung dieses Nachteils kann , wie in Fig. 3 gezeigt, in dem Schaltgetriebe 13 ein zusätzliches Zwischenrad 36 drehbar gelagert sein, das sowohl mit dem auf der Getriebeausgangswelle 15 drehfest angeordneten Zahnrad 29 als auch mit dem an der Abtriebswelle 30 befestigten Zahnrad 34' kämmt. Wie aus dem Querschnitt nach Fig. 3 hervorgeht, führt diese Maßnahme zu einer erheblichen Verringerung der seitlichen Abmessungen des Schaltgetriebes. Es ist erkennbar, daß das Zwischenrad 36 eine Umkehr der Drehrichtung bewirkt, d. h. im Gegensatz zur Ausführungsform nach den Fig. 1 und 2 sind bei dieser Ausführungsform die Drehrichtungen der Zahnräder 29 und 34' und damit der Getriebeausgangswelle 15 und der Abtriebswelle 30 gleich.

Wenn statt einem Zwischenrad zwei Zwischenräder vorhanden sind, dann ist die Drehrichtung von Getriebeausgangswelle 15 und Abtriebswelle 30 wieder gegenläufig.

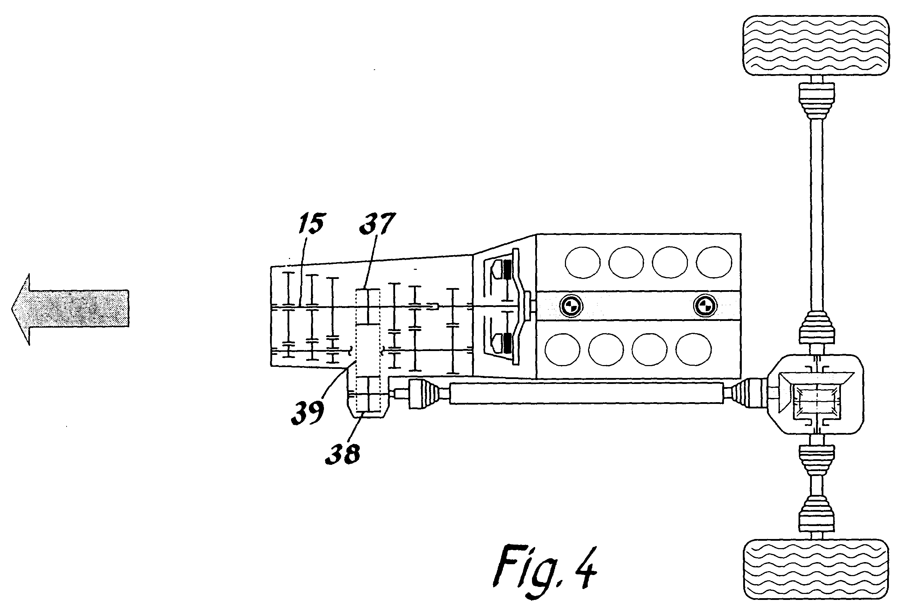

Bei der in Fig. 4 gezeigten Ausführungsform ist die Getriebeausgangswelle 15 mit der Abtriebswelle 30 über einen Kettentrieb gekuppelt. Zu diesem Zweck sind zwei Kettenräder 37 und 38 auf der Getriebeausgangswelle 15 bzw. auf der Abtriebswelle 30 drehfest angeordnet und durch eine Kette 39 verbunden. In den übrigen konstruktiven Merkmalen entspricht diese Ausführungsform der Ausführungsform nach Fig. 1, weshalb ein weitere Erläuterung entbehrlich ist.

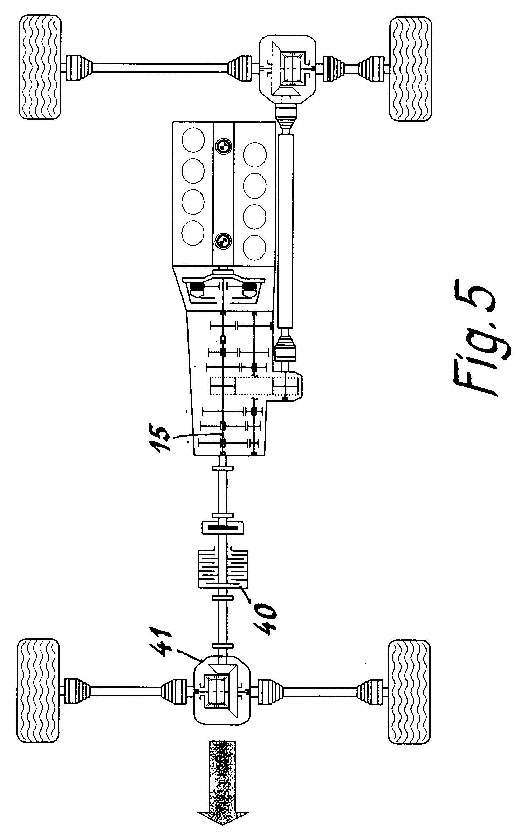

In Fig. 5 ist gezeigt, wie die Ausführungsform nach Fig. 4 bei einem Kraftfahrzeug mit Allradantrieb angewendet werden kann. Eine solche Abwandlung kann ohne großen konstruktiven Aufwand durchgeführt werden, indem die Getriebeausgangswelle 15 über eine Kupplung 40, z. B. eine Visco-Kupplung oder eine geregelte Lamellenkupplung mit einem Vorderachsgetriebe 41 verbunden wird.

Selbstverständlich können auch die Ausführungsformen nach den Fig. 1 bis 3 in der in Fig. 5 gezeigten Weise für ein Kraftfahrzeug mit Allradantrieb abgewandelt werden.

Wenn vorstehend allgemein von Zahnrädern gesprochen wird, so ist davon auszugehen, daß es sich hierbei um gerad- oder schrägverzahnte Stirnräder handelt.

### Bezugszeichenliste:

- 10: Hinterachsgetriebe
- 11: Motor
- 12: Kupplung
- 13: Schaltgetriebe
- 14: Getriebeeingangswelle
- 15: Getriebeausgangswelle
- 16: Vorgelegewelle
- 17: Welle in Welle Lagerung
- 18: Zahnrad drehfest auf 14
- 19: Zahnrad drehfest auf 16
- 20: Zahnrad drehfest auf 16
- 21: Zahnrad drehfest auf 16
- 22: Zahnrad drehfest auf 16
- 23: Zahnrad drehbar auf 16
- 24: Zahnrad drehbar auf 16
- 25: Zahnrad drehbar auf 15
- 26: Zahnrad drehbar auf 15
- 27: Zahnrad drehbar auf 15
- 28: Zahnrad drehfest auf 15
- 29: Zahnrad drehfest auf 15
- 30: Abtriebswelle
- 31: Kegelrad an 30
- 32: Kegelrad von 10
- 33: Achswellen
- 34: Zahnrad an 30
- 35: Zahnrad drehfest auf 15
- 36: Zwischenrad
- 37: Kettenrad auf 15
- 38: Kettenrad auf 30
- 39: Kette
- 40: Kupplung
- 41: Vorderachsgetriebe

## Patentansprüche

1. Schaltgetriebe für Kraftfahrzeuge mit Mittelmotor, der hinter dem Getriebe angeordnet ist, umfassend eine Getriebeeingangswelle, eine zur Getriebeeingangswelle parallele Vorgelegewelle, eine zur Vorgelegewelle parallele Getriebeausgangswelle, mehrere Zahnradstufen, die jeweils zwei miteinander kämmende Zahnräder aufweisen, von denen eines auf der zugeordneten Welle drehfest angeordnet ist und das andere auf der zugeordneten Welle drehbar gelagert ist, Wechselkupplungen, um ausgewählte drehbar gelagerte Zahnräder mit der zugeordneten Welle drehfest zu verbinden, und eine mit der Getriebeausgangswelle und dem Hinterachsgetriebe gekuppelte, seitlich neben dem Getriebe und dem Motor angeordnete Abtriebswelle, dadurch **gekennzeichnet**, daß die Abtriebswelle (30) über Stirnräder (29, 34; 35, 34) oder einen Kettentrieb (37, 38, 39) mit der Getriebeausgangswelle (15) gekuppelt ist.

2. Schaltgetriebe nach Anspruch 1, dadurch **gekennzeichnet**, daß die Abtriebswelle (30) mit einem auf der Getriebeausgangswelle (15) drehfest angeordneten Stirnrad (29) gekuppelt ist, das zugleich eine der Zahnradstufen bildet.

3. Schaltkupplung nach Anspruch 1 oder 2, dadurch **gekennzeichnet**, daß die Abtriebswelle (30) über mindestens ein Zwischenrad (36) mit einem auf der Getriebeausgangswelle (15) drehfest angeordneten Stirnrad (29) gekuppelt ist.
